(19) **Europäisches Patentamt European Patent Office Office européen des brevets**

(11) **EP 4 621 658 A1**

(12) **EUROPEAN PATENT APPLICATION**

(43) Date of publication:
    **24.09.2025 Bulletin 2025/39**

(21) Application number: **25164974.5**

(22) Date of filing: **20.03.2025**

(51) International Patent Classification (IPC):
    *G06N 3/092* (2023.01)    *G06N 3/045* (2023.01)
    *G06N 3/096* (2023.01)    *G06F 16/00* (2019.01)
    *G06N 3/048* (2023.01)    *G06N 3/09* (2023.01)

(52) Cooperative Patent Classification (CPC):
    **G06N 3/045; G06N 3/092; G06N 3/096;**
    G06N 3/048; G06N 3/09

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH MA MD TN**

(30) Priority: **22.03.2024 US 202418613177**

(71) Applicant: **Microsoft Technology Licensing, LLC
    Redmond, WA 98052-6399 (US)**

(72) Inventors:
    • **SHARMA, Amit**
      **Redmond, 98052-6399 (US)**
    • **LI, Hua**
      **Redmond, 98052-6399 (US)**
    • **LI, Xue**
      **Redmond, 98052-6399 (US)**
    • **JIAO, Jian**
      **Redmond, 98052-6399 (US)**

(74) Representative: **Murgitroyd & Company
    165-169 Scotland Street
    Glasgow G5 8PL (GB)**

(54) **TRAINING A MODEL WITH REINFORCEMENT LEARNING TO PROMOTE NOVELTY AND RELEVANCE**

(57)    A technique uses reinforcement learning to train a plural-objective model that generates target items based on the dual objectives of relevance and novelty. The reinforcement learning expresses each state as a combination of a particular source item (e.g., a query) and a particular target item. The reinforcement learning generates an action that indicates whether the target item is selected as a good match for the source item. The reinforcement learning then generates a reward based on the state and the action. In doing so, the reinforcement learning relies on a novelty-reference model for assessing novelty and a relevance-reference model (e.g., a large language model) for assessing relevance. The reinforcement learning then uses the reward to update parameters of the plural-objective model.

FIG. 1

EP 4 621 658 A1

**Description**

**BACKGROUND**

Search engines and other on-line platforms commonly use machine-trained models to match source items (e.g., input queries) to target items (e.g., documents or ads). The machine-trained models are commonly trained using supervised learning. This type of training commonly uses relevance (such as semantic similarity) as the principal criterion in matching the source items to the target items.

**SUMMARY**

A technique is described herein for training a model that selects target items based on the dual objectives of relevance and novelty. This model is referred to herein as a "plural-objective model." In some examples, a plural-objective model is a model that is trained to satisfy plural objectives, and to distinguish it from other models described herein. "Relevance," in some examples herein, indicates an extent to which two items are considered related with each other based on any standard of association (such as semantic similarity). "Novelty," in some examples herein, reflects an extent to which target items produced by the plural-objective model are not also produced by another reference system, referred to herein as a novelty-reference model.

According to illustrative implementations, the technique uses reinforcement learning to produce the plural-objective model. The reinforcement learning expresses each state as a combination of a particular source item (e.g., a query) and a particular target item (e.g., a document or an ad). The reinforcement learning then selects an action, which is a binary indication of whether or not the target item is selected as a good match for the source item. The technique's use of a small action space (here a binary yes/no outcome) increases the rate of convergence in learning. Being faster, the technique's reinforcement learning makes efficient use of memory and processing resources.

According to some implementations, the technique generates a reward for each action based on guidance provided by one or more reference models. A first reference model, also referred to as the "novelty-reference model," generates a set of candidate target items. In some examples herein, a novelty-reference model is a model that serves as a reference for assessing novelty. The technique assesses novelty of a selected target item based on whether that target item is a member of the set of candidate items. A second reference model is a language model (such as a large language model (LLM)) that provides a binary indication of whether the selected target item is relevant to the source item. The second reference model is referred to herein as a "relevance-reference model." A relevance-reference model, in some examples herein, is a model that serves as a reference for assessing relevance. The technique's use of reference models overcomes the typical scarcity of preexisting user feedback from which novelty may be learned.

When applied in an inference-stage system, the plural-objective model has low latency and is resource efficient, e.g., compared to another approach in which an inference-stage system consults a large language model at the time that a user submits a query. Further, the plural-objective model identifies target items that have an increased likelihood of receiving positive attention from recipients. This outcome may be attributed to the perception of the target items as both novel (and therefore "fresh") and relevant.

The above-summarized technology is capable of being manifested in various types of systems, devices, components, methods, computer-readable storage media, data structures, graphical user interface presentations, articles of manufacture, and so on.

This Summary is provided to introduce a selection of concepts in a simplified form; these concepts are further described below in the Detailed Description. This Summary is not intended to identify key features or essential features of the claimed subject matter, nor is it intended to be used to limit the scope of the claimed subject matter.

**BRIEF DESCRIPTION OF DRAWINGS**

Fig. 1 shows an inference-stage system for mapping queries to target items, and a reinforcement learning system for training at least one model used by the inference-stage system.
Fig. 2 shows an example of the operation of the inference-stage system of Fig. 1.
Fig. 3 shows one implementation of a plural-objective model which is trained by the reinforcement learning system of Fig. 1, here operating in the training stage.
Fig. 4 shows a use of the plural-objective model of Fig. 1 in the inference-stage system of Fig. 1.
Fig. 5 shows an overview of the reinforcement learning system of Fig. 1.
Fig. 6 is a flowchart that shows one manner of operation of the reinforcement learning system of Fig. 1.
Fig. 7 shows an illustrative language model for implementing various functions of the computing system of Fig. 1.

Fig. 8 is a flowchart that provides an overview of one manner of operation of the reinforcement learning system of Fig. 1.

Fig. 9 is a chart that shows the performance of the inference-stage system of Fig. 1 relative to other systems.

Fig. 10 is a flowchart that provides an overview of one manner of operation of a reward system used by the reinforcement learning system of Fig. 1.

Fig. 11 is a flowchart that shows an overview of one manner of operation of the inference-stage system of Fig. 1.

Fig. 12 shows computing equipment that, in some implementations, is used to implement the computing system of Fig. 1.

Fig. 13 shows an illustrative type of computing system that, in some implementations, is used to implement any aspect of the features shown in the foregoing drawings.

The same numbers are used throughout the disclosure and figures to refer to like components and features.

## DETAILED DESCRIPTION

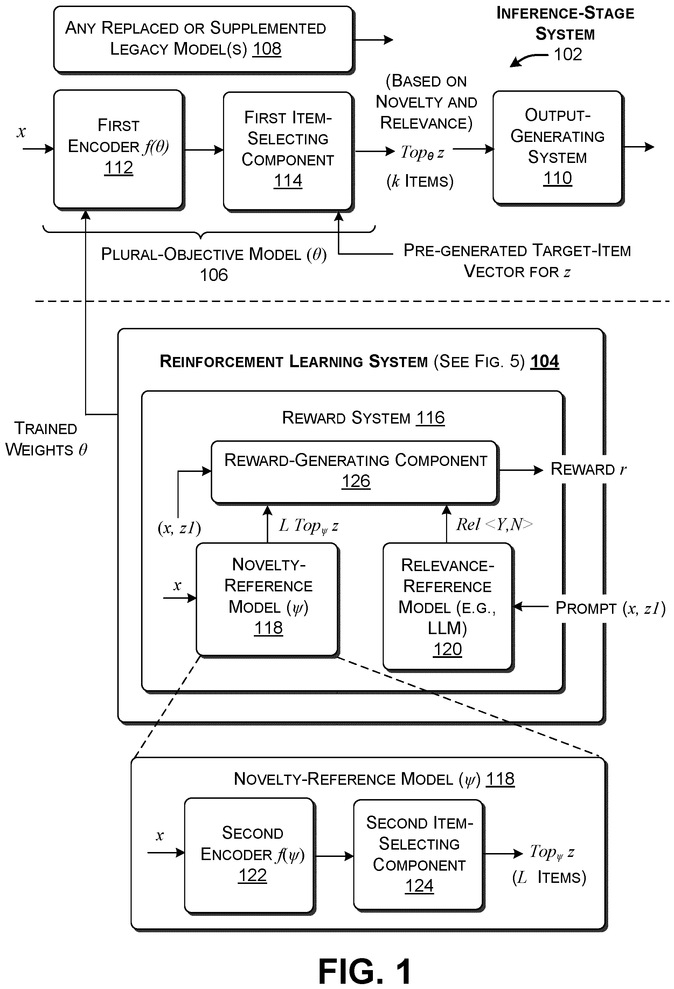

Fig. 1 shows an inference-stage system 102 for mapping queries to target items, and a reinforcement learning system 104 for training at least one model used by the inference-stage system 102. The inference-stage system 102 includes at least a plural-objective model 106 that is trained by the reinforcement learning system 104 to promote both novelty and relevance. A "plural objective" model, as the term is used herein in some examples, indicates that a model is trained to promote plural objectives. In most of the examples presented here, the plural objectives are novelty and relevance, and thus, in these examples, the plural-objective model 106 constitutes a dual-objective model. In other examples, the plural-objective model 106 is trained to satisfy three or more objectives, such as age-appropriateness, novelty, and relevance.

In some implementations, the plural-objective model 106 replaces the use of at least one legacy model 108 in the inference-stage system 102 as a primary source of target items. Legacy means preexisting. In some implementations, the legacy model 108, if used, produces target items that primarily promote a supervised learning objective, such as semantic similarity. In other implementations, the plural-objective model 106 supplements the use of one or more other models, such as the legacy model 108. An output-generating system 110 generates output information based on the target items selected by the plural-objective model 106 (and the legacy model 108, if used). For example, the output-generating system 110 produces output for presentation by a browser application of a user device (not shown), e.g., in the context the user's interaction with a search engine or any other application.

More specifically, given an illustrative source item $x$ (e.g., an input query), the plural-objective model 106 uses trained model parameters $\theta$ to identify a set of $k$ target items (e.g., 50 target items) that are considered both relevant with respect to $x$ and novel with respect to the output of a "novelty-reference model" (described below). The plural-objective model 106 performs this task by encoding the query into first encoder output information, and then comparing the query output information with plural instances of pre-generated second encoder output information, wherein each instance of encoder output information is associated with a particular target item. A data store (not shown) stores the plural instances of pre-generated second encoder output information associated with the different target items; they are produced offline by encoding the respective target items. As used herein, $z$, in some examples, refers to an individual target item.

More generally, "relevance" indicates an extent to which two items (e.g., a source item and a target item) are considered related to each other based on any standard of association. For example, for one standard, a target item is considered a good match for a source item when it is semantically similar to the source item. For another standard, a target item is considered a good match for a source item because it is an answer to the source item. For another standard, a target item is considered a good match for a source item because users have commonly selected the target item in response to submitting the source item, and so on. In many cases, the standard does not explicitly promote novelty, although it is possible that a particular standard may do so. "Novelty" reflects an extent to which target items produced by the target item are not also produced by at least one reference system, referred to herein, in some examples, as the novelty-reference model. Novelty is different than the concept of diversity because diversity is satisfied by adequate variation of target items within any given set. Novelty only requires that the target items vary from target items produced by some other identified reference source or standard. Thus, "relevance" implicates the relation of a particular source item to a particular target item, whereas "novelty," in some examples herein, refers to how the particular target item is related to some specified basis for comparison (here, the output of a novelty-reference model). The term "matching," in some examples herein, and its variants refer to a conclusion by a machine-trained model or other process that two items are associated with each other based on any standard of association. When specifically referring to output of the plural-objective model 106, a particular target item is said to match the source item when the target item is determined to be relevant to the source item and novel with respect to the target items produced by the novelty-reference model.

The meaning of "source item" and "target item" are different with respect to different applications. Generally, in some examples herein, a source item is an input item, and a target item is an item that is determined to match the target item. More specifically, in some search applications, a source item is a query, and a target item is a matching document title, ad information (e.g., an ad keyword), etc. In some dialogue or BOT applications, a target item is a question, and a target item is an answer that adequately responds to the question. Further note that this explanation presents examples in which the source items and target items are text-bearing items; but other applications rely on the principles used herein to find other content items (e.g., images, video items, audio items) that are both relevant and novel with respect to a search query (which itself can be composed of any type(s) of content).

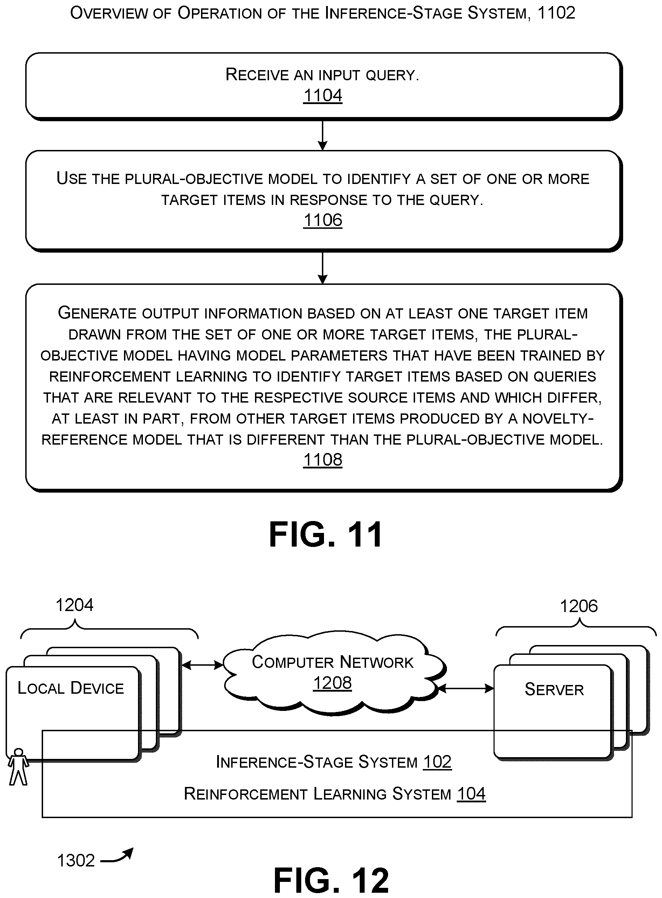

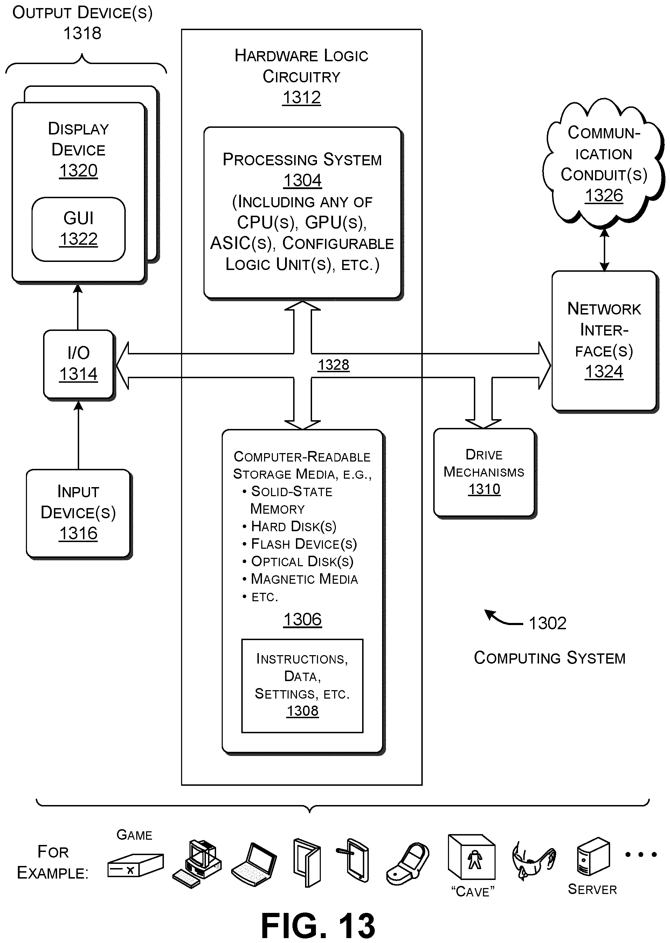

A "machine-trained model" or "model," in some examples herein, refers to computer-implemented logic for executing a task using machine-trained parameters that are produced in a training operation. A "parameter" (such as a weight or bias value), in some examples, refers to a value that is iteratively produced by the training operation. A "token," in some examples herein, refers to a unit of information processed by a machine-trained model, such as a word or a part of a word. In some cases, a tokenizer produces the tokens, but an item (e.g., a text passage) is said to be composed of tokens in a general sense (in which "token" is a synonym of "part"), irrespective of when and where those tokens are actually produced. A "prompt," in some examples herein, refers to a sequence of tokens submitted to a machine-trained model. A "distributed vector," in some examples herein, expresses the semantic content of an information item by distributing information over its k dimensions. A distributed vector is in contrast to a sparse one-hot vector that allocates particular dimensions of the vector to particular concepts. In some contexts, terms such as "component," "module," "engine," and "tool" refer to parts of computer-based technology that perform respective functions. Figs. 12 and 13, described below, provide examples of illustrative computing equipment for performing these functions.

The description will assign labels to different models, including the labels "plural-objective model" (described above with reference to the plural-objective model 106), "legacy model" (described above with reference to the legacy model 108), "novelty-reference model" (described below), "relevance-reference model" (described below), and "initial model" (described below). Any label associated with a particular model characteristic or role does not necessarily imply that this particular model is the only model that has the model characteristic or is capable of performing the role; it is simply used to clarify what component in the figures is being referred to at any given time. For example, the term "plural-objective" model, in some examples herein, is used to refer to the model 106 because it is trained based on the objectives of novelty and relevance; this is not meant to exclude the possibility that other models described herein are also trained to satisfy other plural training objectives.

Returning to the description of Fig. 1, the plural-objective model 106 includes a first encoder 112 for encoding the source item $x$ using the model parameters $\theta$. This yields first encoder output information represented by $f_\theta(x)$. For each candidate target item $z$, a first item-selecting component 114 retrieves an instance of second encoder output information that has been previously produced by encoding the particular target item z. The first item-selecting component 114 then generates a score ($Score_{x,z}$) that expresses an extent to which the candidate target item z is considered an appropriate match for the source item x, e.g., using cosine similarity or any other distance metric. The first item-selecting component 114 then uses a softmax (normalized exponential function) to convert the scores associated with different target items into probabilities. The first item-selecting component 114 then applies any ranking factor(s) to select a set of k target items, e.g., by selecting a subset of target items that have the highest (most favorable) scores.

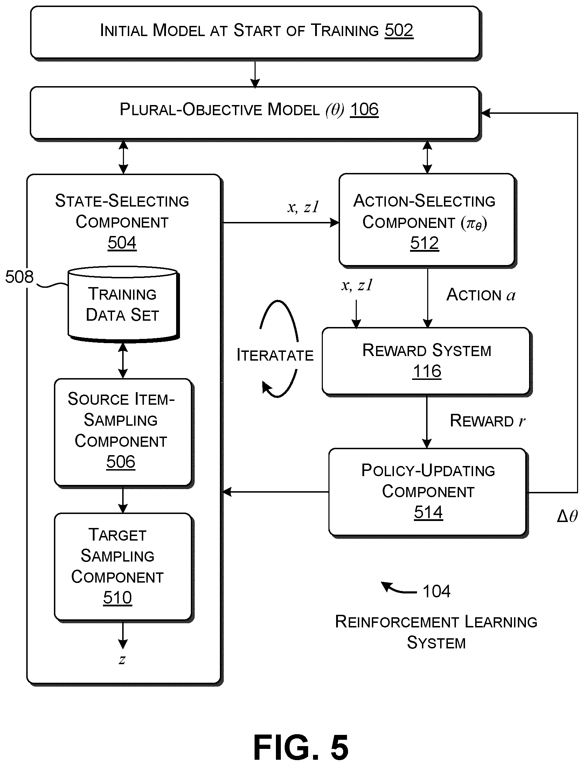

The reinforcement learning system 104 will be explained more fully with respect to Fig. 5. By way of overview, the reinforcement learning system 104 expresses each state to be evaluated as a particular source item $x$ combined with a particular candidate target item z1. The reinforcement learning system 104 then samples an action that is considered appropriate for the state. In one case, the per item-action is a binary indication of whether the target item z1 under consideration is selected or not as a good match. Hence, in one implementation, the number of actions is 2. There are $2 \times Z$ situations in these two actions can be invoked, where Z is the total number of candidate target items. Note that other implementations may introduce other actions.

By using an action space that has a small number of actions (here, two actions), the reinforcement learning system 104 is able to learn the parameters of the plural-objective model 106 more quickly. Being faster, the reinforcement learning system 104 also makes efficient use of memory and processing resources. This is contrast to the alternative case in which each action is associated with the selection of a particular target item, which has at least as many actions as there are candidate target items. More formally stated, for policy gradient algorithms, it is found that the number of reward samples needed for the training to obtain a desired accuracy increases proportionally to the square of the number of actions. Therefore, the technique described above decreases (shortens) convergence time by reducing the action space, converting a quadratic dependence to linear. It is true that the plural-objective model 106 increases the number of states in the reinforcement learning (because each unique combination of a query and a target item is a state); but even with this increase in state space, the use of a reduced action space achieves a net reduction in convergence time and a consequence reduction in the consumption of resources. In other words, reducing the action space has greater efficiency benefits than reducing the state space.

A reward system 116 evaluates the appropriateness of the chosen action based on one or more reference sources. Generally, a "reference source," in some examples herein, is any entity that can be consulted (or referred to) to assess any specified characteristic of a subject under consideration. Here, the reference sources are machine-trained models and/or other logic for assessing the novelty and relevance associated with a specified state and action. More specifically, the reward system 116 uses a first reference model to map the source item $x$ into another set of candidate target items. The first reference model is trained in a different manner than the plural-objective model 106, e.g., by principally emphasizing relevance in learning (not novelty, or not necessarily novelty). The reward system 116 determines whether the state's target item is among the set of candidate target items. It then uses this finding as a measure of the novelty of the state's target item. The first reference model is henceforth referred to as a "novelty-reference model" 118 to help distinguish it from other models described herein. A novelty-reference model, in some examples herein, is a model that serves as a reference for assessing novelty. A second reference model directly verifies whether the target item $z1$ is relevant or not to the source item x. The second reference model is henceforth referred to as a "relevance-reference model" 120 to help distinguish it from other models described herein. A relevance reference model, in some examples herein, is a model that serves as a reference for assessing relevance, and thereby operates as an oracle. An oracle, in some examples herein, is an entity that can be consulted to obtain an authoritative answer to a specified question.

In some examples, the novelty-reference model 118 uses trained parameters $\psi$ to produce a set of $L$ target items (e.g., 200 target items) that are relevant to a source item $x$, where $L$ does not necessarily equal $k$. As shown in the bottom portion of Fig. 1, one implementation of the novelty-reference model 118 includes a second encoder 122 and a second item-selecting component 124 that operate in the same manner as the first encoder 112 and the first items-selecting component 114 of the plural-objective model 106, respectively, but with respect to the set of parameters $\psi$. Note that, in some implementations, the legacy model 108, if used, may represent the kind of model 118 shown in in Fig. 1.

In some implementations, the relevance-reference model 120 is a language model (such as a large language model (LLM)) that autoregressively generates an answer to a prompt presented to it. The answer indicates whether the candidate target item $z1$ is relevant or not to the source item x. For instance, the relevance-reference model 120 is implemented by any of the publicly accessible models provided by OpenAI of San Francisco California, such as ChatGPT.

In other implementations, the reward system 116 uses an ensemble of reference models in place of a single reference model, the outputs of which are merged into a single result. For example, the novelty-reference model 118 may represent a combination of plural reference models (novelty-reference model1, novelty-reference model2, etc.), each of which produces a subset of reference items for use in assessing novelty. Different implementations can consult one of the novelty-reference models or two or more of the novelty-reference models based on any application-specific rules.

A reward-generating component 126 generates a reward r based on the state ($x,z1$), the action ($a$), the output of the novelty-reference model 118 ($Top_\psi$ $z$), and the output of the relevance-reference model 120 ($Rel$ = 0 or 1). As will be described below, the reward-generating component 126 assigns the highest reward if $z1$ is found to be relevant to $x$ and not in $Top_\psi$ $z$, meaning that it is both relevant and novel.

The use of rewards computed in the above manner overcomes the typical scarcity of user feedback from which novelty can be learned in a more direct manner. Further note that the parameters of the plural-objective model 106 cannot be directly optimized because it contains non-differentiable components, e.g., with respect to the model's sorting of target items to find the top k items. The use of reinforcement learning, described more fully below, overcomes this limitation.

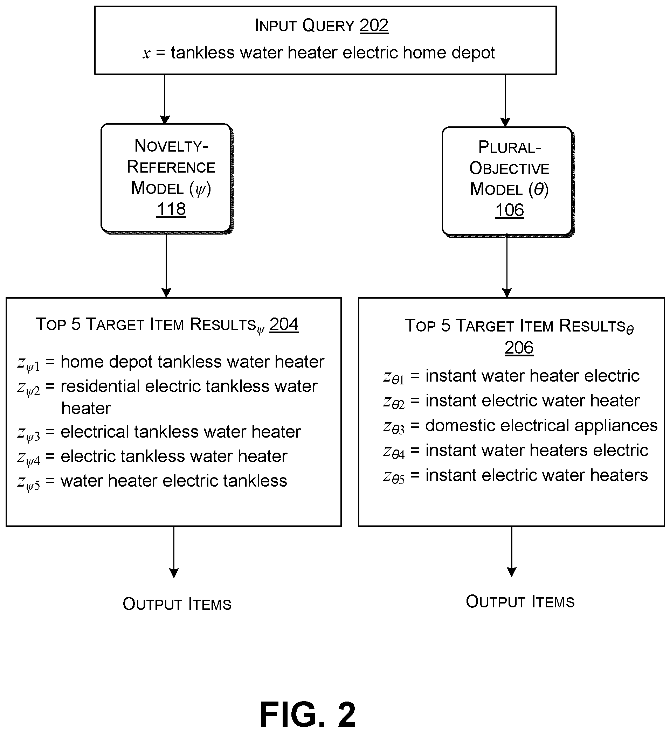

Fig. 2 shows an example of the operation of the inference-stage system 102 of Fig. 1 compared to the novelty-reference model 118. An input query 202 is a source item $x$ having the text: "tankless water heater electric home depot." The novelty-reference model 118 maps the query 202 into a set top-ranking target items 204. The plural-objective model 106 maps the query 202 into another set of top-ranking target items 206. The novelty-reference model 118 is trained to use relevance as a guide in selecting items and/or some other supervised objective. As such, many of the entries in the set of target items 204 produced by the novelty-reference model 118 share a high degree of lexical similarity with the input query 202. In contrast, some of the entries in the set of target items 206 produced by the plural-objective model 106 capture the intent of the query 202 using words and concepts that are not explicitly used in the query 202. However, although not shown in this example, the plural-objective model 106 can also produce some target items that match the target items produced by the novelty-reference model 118 and/or are only slight variations of the target items produced by the novelty-reference model 118.

A search system benefits from the inclusion of target items that emphasize novelty in addition to relevance by increasing the likelihood that recipients will meaningfully engage with the target items, e.g., by clicking on them. Through the use of the plural-objective model 106, the search system can also reduce the likelihood that results received by recipients will be perceived as unwanted clutter and noise.

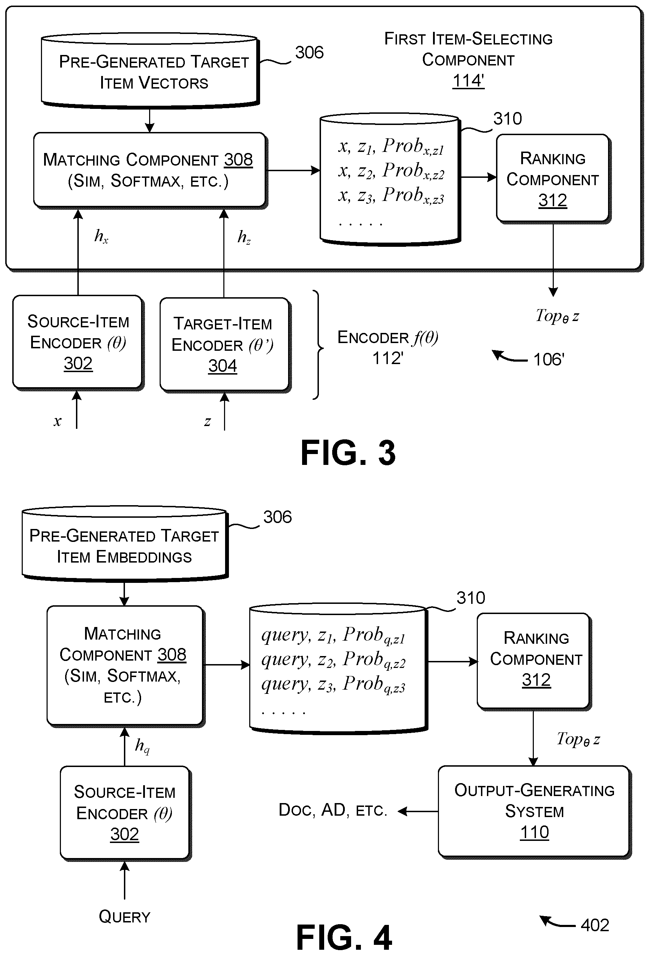

Fig. 3 shows one implementation of the plural-objective model 106 of Fig. 1 that uses a dual-encoder architecture, operating here in a training stage. This version of the plural-objective model 106 is referred to, in some examples herein, as a plural-objective model 106'. That is, a first encoder 112' (which is the training-stage counterpart of the first encoder 112 of Fig. 1) includes a source-item encoder 302 for mapping a source item $x$ to first encoder output information $h_s$ (where $f_\theta(x) = h_s$), and a target-item encoder 304 for mapping a candidate target item $z$ to second encoder output information $h_z$ (where $f_\theta(z1) = h_z$). Alternatively, in some implementations, the plural-objective model 106 retrieves a pre-generated instance of second encoder output information associated with the candidate target item $z$ from a data store 306. This presumes that the second encoder output information has been previously generated.

Additional information regarding the updating strategy used with respect to the parameters of the target-item encoder 304 is set forth below in the explanation of Fig. 5. Suffice it to say at this juncture that there are least two strategies with respect to the updating of parameters used by the plural-objective model 106. In a first implementation, the parameters of the target-item encoder 304 are not updated and remain fixed throughout the training process. The parameters of the target-item encoder 304 therefore remain the same as the initial supervised model. In practice, this means that first encoder 112' draws instances of encoder output information associated with different candidate target items from the data store 306 that were originally produced by the initial supervised model, and remain fixed throughout the training process. In a second implementation, the parameters of the target-item encoder 304 are updated during the training process at the same frequency as the parameters of the source-item encoder 302. The second strategy consumes more resources than the first strategy because it requires updating the entire set of encodings for the candidate target items after each batch. In other words, to calculate the top-k target items for even a single source item, the plural-objective model 106 needs to consider the embedding (target-item encoded information) of each of the candidate target items. Pre-storing a fixed set of target-item encodings eliminates the need for recalculating all of the encodings at the end of each batch. Fig. 3 shows that the target item encoder 304 uses parameters $\theta'$, which is generally meant to represent the fact that they may be same version of the parameters $\theta$ used by the source-item encoder 302 (as per the second strategy), or a different version (as per the first strategy). In either strategy, once the training has finished, the data store 306 stores the instances of encoder output information associated with the different candidate item embeddings, and these need not be recomputed during the inference (production) stage upon the submission of each query.

The source-item encoder 302 and the target-item encoder 304 are implemented by any type of multi-layer neural network, such as a feed-forward neural network, a convolutional neural network, a transformer-based model, etc., or any combination thereof. For example, each encoder (302, 304) is implemented as a multi-layer transformer network that uses the BERT architecture. General background information on the BERT-type architecture can be found in Devlin, et al., "BERT: Pre-training of Deep Bidirectional Transformers for Language Understanding," in Proceedings of the 2019 Conference of the North American Chapter of the Association for Computational Linguistics: Human Language Technologies, Vol. 1 (Long and Short Papers), June 2018, pp. 4171-4186. Each instance of encoder output information is expressed as one or more distributed vectors, and, in some instances, may be considered hidden state information.

A first item-selecting component 114' (which is the training-stage counterpart of the first item-selecting component 114 of Fig. 1) includes a matching component 308, a data store 310, and a ranking component 312. The matching component 308 generates a score ($Score_{x,z}$) that measures a degree to which each candidate target item z is considered a good match for the source item x. In some implementations, the matching component 308 performs this computation by using any distance metric (such as cosine similarity) to measure the distance between the first encoder output information $h_x$ and the second encoder output information $h_z$. The first item-selecting component 114' then normalizes each distance value with respect to other distance values associated with other target items using the softmax function. This yields a probability $Prob_{x,z}$ for each candidate target item z, with respect the submitted source item x. The data store 310 stores information regarding the pairs of items that have been processed (each including a particular source item and a particular target item) and the probabilities associated therewith. The ranking component 312 chooses one or more candidate items based, at least in part, on their matching scores. For instance, the ranking component 312 selects the k candidate target items having the highest matching scores.

Fig. 4 shows the operation of the plural-objective model 106 in the inference-stage system 102 with respect to a particular application. The source-item encoder 302 receives a query submitted by a user, and converts the query into encoder output information $h_q$. The matching component 308 compares the query with each candidate target item by determining the distance between the encoder output information $h_q$ and each precomputed instance of encoder output information $h_z$ associated with each candidate target item z. The matching component 308 retrieves each $h_z$ from the data store 306. The matching component 308 normalizes these matching scores, and the data store 306 stores the resultant probability information. The ranking component 312 selects a subset of candidate target items based on their scores. The output-generating system 110 produces output information based on the selected candidate items. For instance, assume that a candidate target item is a keyword (e.g., an ad keyword) associated with the submitted query. The output-generating system 110 retrieves and serves an ad associated with this keyword. In another case, assume that a candidate target item is a document or part thereof. The output-generating system 110 can generate search result information that includes a descriptive snippet and link associated with the matching document.

In some implementations, the novelty-reference model 118 is trained using supervised learning based on a loss function that expresses a contrastive loss training objective or a triplet-loss training objective or any other loss function that takes into account negative pairings. For example, the novelty-reference model 118 is trained based on the following training objective:

$$Loss = \arg\max_{\psi} \left[ -\log \sum_{(x,z)\in D} \frac{\exp\left(sim(\psi(x),\psi(z)\right)}{\sum_{z'\in neg(x)} \exp\left(sim(\psi(x),\psi(z'))\right)} \right] \quad (1).$$

The numerator of the summation expresses the similarity (*sim*) between the encoder output information for the source item *x* and the encoder output information for the target item *z*, with respect to a target item that is predetermined to be associated with the source item, based on any specified standard of association. The dominator of the summation expresses a sum of similarities, each expressing the similarity (*sim*) between the encoder output information for the source item *x* and the encoder output information for a particular target item z', in which z' is predetermined to be not associated with the source item, thereby defining a negative association. The negative training examples can be randomly selected or mined from a training set based on any stated objective. Overall, training performed using the loss function of Equation (1) has the effect of pushing source items close to target items that are associated with the source items and away from target items that are not associated with the source items.

Fig. 5 shows an overview of the reinforcement learning system 104 of Fig. 1. The purpose of the reinforcement learning system 104 is to iteratively adjust the weights $\theta$ of the plural-objective model 106 based on an extent to which these parameters promote the selection of candidate target items that are both relevant and novel. In some implementations, the reinforcement learning system 104 starts training based on an initial model 502 having pre-trained weights. Generally, an initial model represents a model at the start of a training process. The initial model 502 can be any machine-trained model that is capable of associating input items with candidate items. In some implementations, the initial model 502 is the novelty-reference model 118 that has been trained using the loss function of Equation (1). In other implementations, the initial model 502 is the novelty-reference model 118 after it has been fine-tuned via further supervised learning. In general, it is beneficial to start with a pre-trained model of high quality to expedite convergence in learning and reduce the consumption of resources in the training process.

A state-selecting component 504 samples (e.g., chooses or selects) each state for which training is performed. As previously described, each state includes a particular source item *x* (e.g., a particular query) and a particular candidate target item z (e.g., a particular ad keyword or a particular document title). In some implementations, a source-item sampling component 506 selects the source item *x* by randomly choosing from among a plurality of candidate source items in a data store 508.

More specifically, the data store 508 includes training examples produced by one or more processes. In one case, the training examples include query-keyword pairs, each including a query (which is a particular source item) submitted to a search engine and an ad keyword (which is a particular target item) that was determined to be associated with the query. In other cases, the training examples include query-title pairs, each including a query (which is a particular source item) submitted to a search engine and a title of a document that a user clicked on after submitting the query. Alternatively, or in addition, the data store 508 provides pairs of items mined from a knowledgebase, collected via a crowdsourcing platform, etc.

A target item-sampling component 510 chooses (or selects) a candidate target item based on one or more sources of candidate items. In a first approach, the plural-objective model 106 selects a target item by sampling from a distribution produced using the plural-objective model 106: $softmax_z\ sim(f_\theta(x), f_\theta(z))$. This sampling operation involves: (1) determining the similarity (*sim*) between the encoder output information ($h_x = f_\theta(x)$) for the source item *x* and the encoder output information ($h_z = (f_\theta(z))$) for each target candidate item z in a vocabulary Z of candidate target items; (2) using the softmax function to determine a distribution of probabilities associated with the candidate target items; and (3) sampling from the candidate target items in a manner that is biased by the probabilities. As explained above with reference to Fig. 3, the encoder output information $h_z$ for each candidate target item may be fixed and retrieved from the data store 306 (as per the first strategy) or dynamically computed (as per the second strategy). However, for simplicity of explanation below, the mathematical notation indicates that both instances of encoded output information ($h_x$, $h_z$) are produced using the same parameters $\theta$.

In other approaches, the target item-sampling component 510 chooses from a distribution produced for the source item *x* based on any other model, trained independently of the plural-objective model 106. For example, in one case, the target item-sampling component 510 samples target items produced by the novelty-reference model 118, beyond the top L target items. In other implementations, the target item-sampling component 510 chooses a candidate target item z1 from the data store 508 (and/or any other pre-generated reference source). For example, assume that the data store 508 provides at least one example that associates the sample *x* with a particular target candidate item *z*, e.g., based on clickthrough data or any other user feedback. The target item-sampling component 510 will select this candidate item z. In other implementations the target item-sampling component 510 samples the candidate target item from a combination of plural subsets of candidate target items provided by any of the above-described sources. For example, the target item-sampling component 510 is configured to sample from the target items produced by the plural-objective model 106 with a first probability $\alpha$, sample from target items produced by the novelty-reference model 118 with a second probability of $\beta$, and sample from target items specified in the data store 508 with a probability of $1 - \alpha - \beta$. The last category of target items is useful to prevent the first two sources from degrading the insights gained by training the initial model 502 via supervised training.

An action-selecting component 512 chooses or samples an action *a* for the state (*x, z*), in conformance with a learned policy $\pi_\theta$. The policy is a function that provides the action given a state, and the policy depends on the learned parameters $\theta$. In one implementation, the action space is binary. For a valid match (*a* = 1), the action indicates that the candidate target item z is selected as matching the source item *x* (wherein a good match in this context satisfies both novelty and relevance criteria). For an action of not selected (*a* = 0), the action *a* indicates that the candidate target item z is not selected as matching the source item x. In some implementations, the action-selecting component 512 samples from the actions (1 or 0) in a manner that is biased by the probability associated with this match, as computed using the plural-objective model 106 using softmax$_z$ *sim* ($f_\theta(x), f_\theta(z)$).

The reward system 116 generates a reward r based on reference evidence provided by the novelty-reference model 118 and the relevance-reference model 120. That is, the novelty-reference model 118 maps the source item *x* to a set of *L* top-ranking target items (*Top$_\psi$ z*). The relevance-reference model 120 receives a prompt that describes the source item *x* and the selected target item *z*. In response, the relevance-reference model 120 autoregressively produces a language-model result (*Rel*) that expresses whether the relevance-reference model 120 considers z to be relevant to *x.*

The prompt sent to the relevance-reference model 120 also includes an instruction that that describes the objectives of a relevance-assessing task and standard by which relevance is to be established, which can vary among applications. For one application environment, the prompt reads, "Given the query 'q', does the target item z express a similar but more general intent?" For another application environment, the prompt reads, "Given the query 'q', is it possible that a document titled z is relevant for the user's intent? Please answer with a single word, Yes or No." Both prompts include a system-prompt preamble, such as "You are an expert in understanding user intent from search engine queries."

The reward system 116 uses the reward-generating component 126 (shown in Fig. 1) for determining a reward based on the state (*x, z*), the *L* top-ranking candidate items (*Top$_\psi$*) produced by the novelty-reference model 118, and the relevance result (*Rel*) produced by the relevance-reference model 120. In one implementation, the reward-generating component 126 uses the following rules for different cases:

$$r_b(x,z) = \begin{cases} 1 \text{ if } Rel(x,z) = 1 \text{ and } z \notin top_\psi(x) \\ -1 \text{ if } Rel(x,z) = 0 \text{ and } z \in top_\psi(x) \\ -0.5 \text{ if } Rel(x,z) = 1 \text{ and } z \in top_\psi(x) \\ -1 \text{ if } Rel(x,z) = 0 \text{ and } z \notin top_\psi(x) \end{cases} \quad (2).$$

For example, the first entry of Equation (2) states that the reward is 1 if the relevance-reference model 120 indicates that the target item z is relevant to the source item x, and z is not in the set of candidate target items produced by the novelty-reference model 118. The second entry states that the reward is -1 if the relevance-reference model 120 indicates that the target item z is not relevant to the source x, and z is included in the set of candidate target items produced by the novelty-reference model 118. More generally, Equation (2) conveys that the target item z is disqualified as a good match if the relevance-reference model 120 indicates that it is not relevant to x. Otherwise, the value of the reward depends on whether or not the target item z is also included in the set of candidate target items produced by the novelty-reference model 118. The reward is highest if z is not in this set; in such a case, the target item exhibits novelty with respect to the output results of the novelty-reference model 118.

A simplified version of Equation (2) retains its first and third rules (for which *Rel* is 1). The simplified version indicates that the reward is 0 for all other cases. An implementation may choose to use the simplified version for those cases in which the relevance-reference model 120 produces noisy results. More specifically, the simplified version is more resilient to the presence of false negatives because the rewards are only activated for cases in which the candidate items are assessed as relevant.

Finally, the reward-generating component 126 produces an action-modified reward r that is a function of the selected action *a* and the reward $r_b$ computed by Equation (2) or its simplified counterpart. In some implementations, the reward *r* is specifically given by $r = r_b a + (-r_b)(1 - a)$.

A policy-updating component 514 first computes a loss measure L based on the above-calculated reward r as follows:

$$L = L - r \log \pi_\theta'(a|x,z) \quad (3).$$

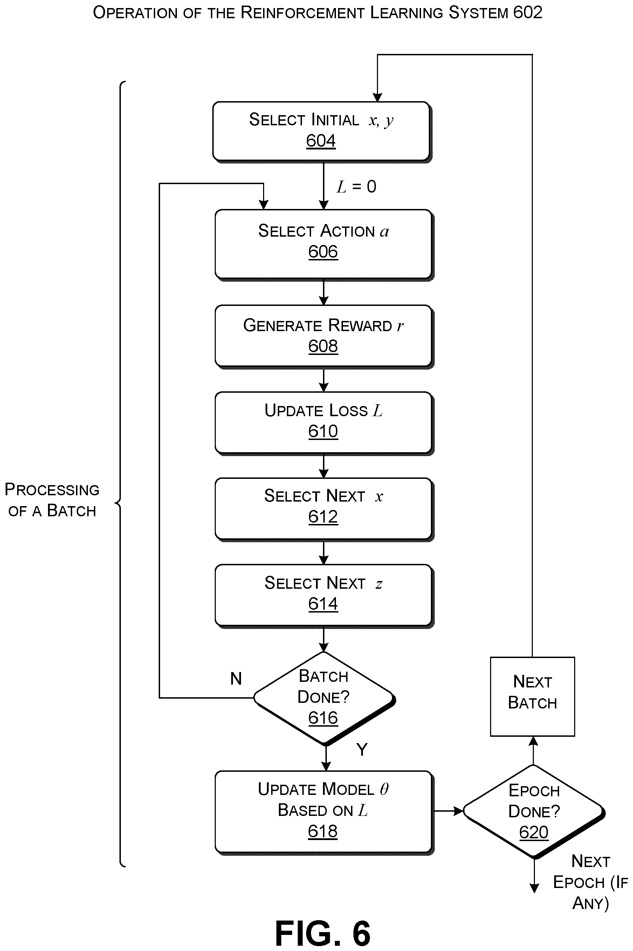

As will be clarified below with reference to Fig. 6, loss L is aggregated over the course of the batch, and then used to update the model parameters $\theta$. A batch is a set of examples (each associated with a chosen state) processed as a group. The expression $\pi'_\theta(a|x,z)$ expands as follows for different values of *a*:

$$\pi'_\theta(a|x,z) = \begin{cases} for\ a = 1, \text{softmax}_Z\ sim(f_\theta(x), f_\theta(z)) \\ for\ a = 0, 1 - \text{softmax}_Z\ sim(f_\theta(x), f_\theta(z)) \end{cases} \quad (4).$$

In this expression, $sim(f_\theta(x), f_\theta(z))$ expresses similarity between the encoder output information for the source item *x* and the encoder output information for the candidate item *z*. Each softmax operation requires generating results over an entire set of possible candidate target items Z. A lower-latency and more efficient version of Equation (4) relies on an approximation of the softmax operation. For example, in some implementations, the policy-updating component 514 uses contrastive loss in place of the softmax function or any other loss that takes account for negative samples. Contrastive loss, for example, only takes into consideration a small subset of negative target items, instead of the entire population of possible target items.

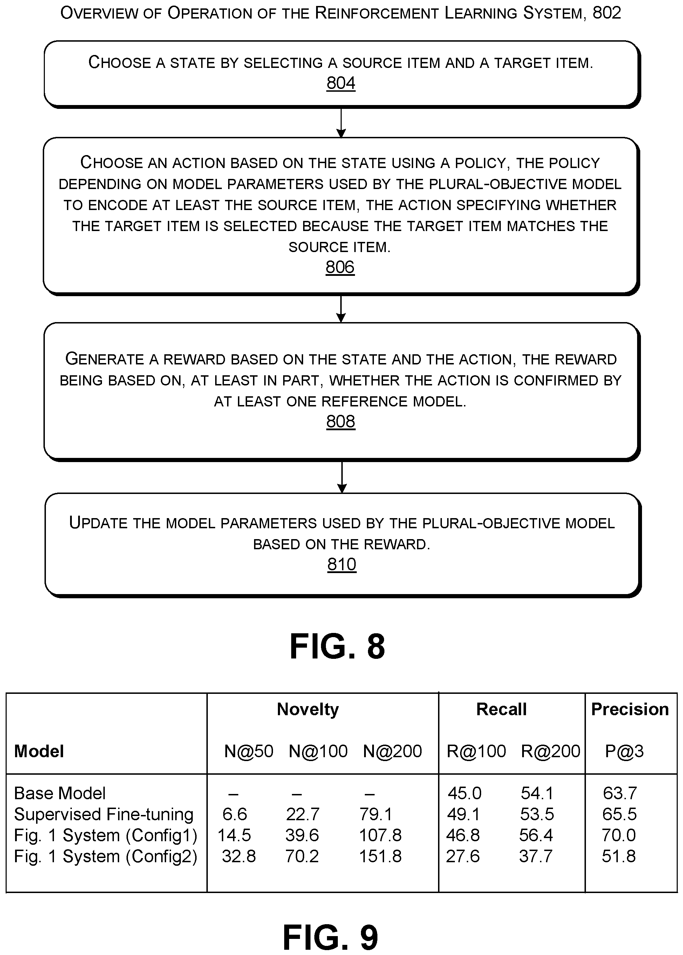

More specifically, in one approach, the policy-updating component 514 uses randomly selected in-batch target items as negatives for contrastive learning (or any other learning that takes negative samples into account). This approach has the drawback that many of the losses will be zero because of the nature of the training used to produce the initial model 502. In another approach, referred to herein, in some examples, as the aggressive approach, the policy-updating component 514 produces negative target items that promote the goal of optimizing novelty by mining a set of top M candidate target items identified by the novelty-reference model 118, where M is a small number, e.g., 5. The policy-updating component 514 then uses Equation (1) (or any other contrastive loss function) to calculate contrastive losses for use in place of the softmax operation. As will be described below with reference to Fig. 9, the aggressive approach produces a trained plural-objective model 106 that chooses novel target items in a robust way, but at the possible expense of relevance. In a conservative approach, the policy-updating component 514 uses triplet loss to produce the losses, in which M is effectively 1. This leads to the production of novel items without significantly impacting relevance. General background on the topic of triplet loss may be found at Schroff, et al., "FaceNet: A Unified Embedding for Face Recognition and Clustering," arXiv, arXiv:1503.03832v3 [cs.CV], June 17, 2015, June 17, 2015, 10 pages.

After a batch *B* of training examples is processed, the policy-updating component 514 updates the parameters $\theta$ of the plural-objective model 106 based on the gradient of *L*. This updating operation is expressed as $\theta = \theta - \eta \nabla L$, in which a $\eta$ is a learning rate hyper-parameter. As per the first updating strategy, the policy-updating component 514 only updates the parameters of the source-item encoder 302. The parameters of the target-item encoder 304 are fixed and remain the same as the initial model 502. As per the second updating strategy, the policy-updating component 514 updates both the parameters of the source-item encoder 302 and the target-item encoder 304.

Note that the above-described principles can be expressed using different respective underlying reinforcement learning frameworks. These training frameworks include the REINFORCE algorithm, any actor-critic technique, any Proximal Policy Optimization (PPO) technique, etc. The REINFORCE algorithm is a policy gradient algorithm and is described in Williams, et al., "Simple statistical gradient-following algorithms for connectionist reinforcement learning," in Machine Learning 8, 1992, pp. 229-256.

Overall, the use of loss attributed novelty in the above-described training sometimes forces the learning process to move away from local minima and find a more satisfactory solution. This yields a trained plural-objective model 106 that produces target items that reflect the intent of the query without directly mimicking its lexical content.

Fig. 6 is a flowchart that shows one illustrative manner of operation 602 of the reinforcement learning system 104. In particular, the reinforcement learning system 104 performs the operations 604-616 in the course of processing a single batch of states. Each state is associated with a particular source item *x* and a particular candidate target item z1.

In block 604, the state-selecting component 504 selects an initial state (*x*, *z*) from the data store 508. In block 606, the action-selecting component 512 chooses an appropriate action *a* for the state. In block 608, the reward system 116 computes a reward r for the state and the action, e.g., using the reward rules of Equation (2) or its simplified counterpart. Block 608 constitutes a form of one-step reinforcement learning in the sense that the reward depends on a single state, not a sequence of states. In block 610, the policy-updating component 514 updates the loss L using Equations (3) and (4). In block 612, the source item-sampling component 506 chooses a next source item x, e.g., by randomly selecting this item from the data store 508. In block 614, the target item-sampling component 510 selects a next candidate target item z by sampling from any of the source(s) described above with reference to Fig. 5. In block 616, the reinforcement learning system 104 returns to block 606, upon which it repeats the above-described operations for the next source item and next target item.

Alternatively, in block 616, the reinforcement learning system 104 concludes that all processing has been completed for the current batch. In block 618, the policy-updating component 514 uses the loss information computed for the batch to update the parameters $\theta$ of the plural-objective model 106, e.g., using stochastic gradient descent in combination with backpropagation. That is, in the second strategy, the policy-updating component 514 updates the parameters of the both the source-item encoder 302 and the target-item encoder 304. In the first strategy, the policy-updating component 514 updates the parameters of just the source-item encoder 302, keeping the parameters of the target-item encoder 304 fixed.

A block 620 governs what happens next. In one case, the reinforcement learning system 104 repeats the above analysis for the next batch. Alternatively, the reinforcement learning system 104 determines that an entire epoch of training has been completed, upon which it repeats the above analysis for the next epoch (if any).

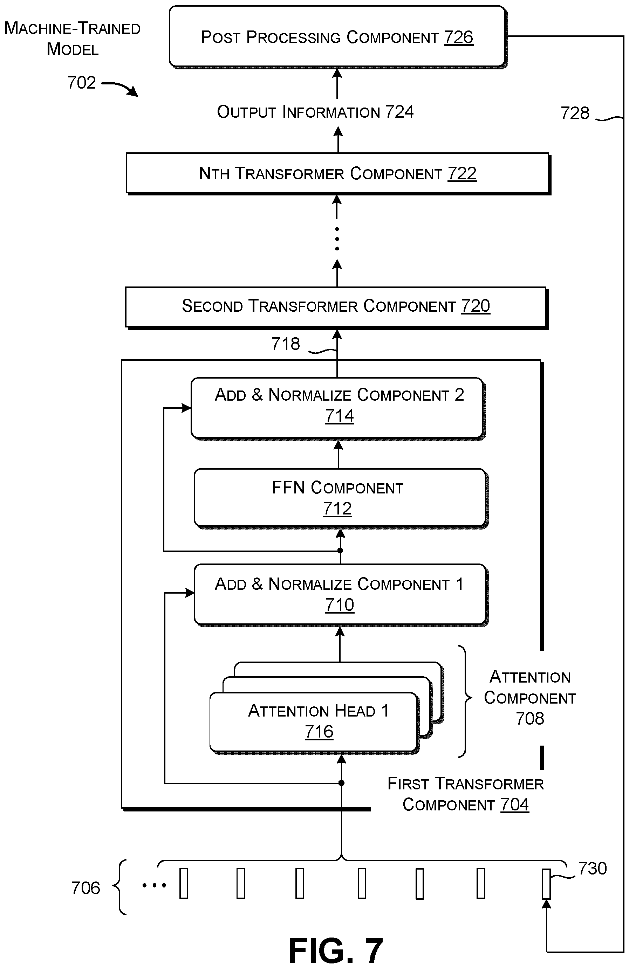

Fig. 7 shows a transformer-based language model ("language model") 702 for implementing any of the plural-objective model 106, the novelty-reference model 118, and/or the relevance-reference model 120. The language model 702 is composed, in part, of a pipeline of transformer components, including a first transformer component 704. Fig. 7 provides details regarding one way to implement the first transformer component 704. Although not specifically illustrated, other transformer components of the language model 702 have the same architecture and perform the same functions as the first transformer component 704 (but are governed by separate sets of weights).

The language model 702 commences its operation with the receipt of input information, such as a passage of text. The input information includes a series of linguistic tokens. In some examples herein, a "token" refers to a unit of text having any granularity, such as an individual word, a word fragment produced by byte pair encoding (BPE), a character n-gram, a word fragment identified by the WordPiece or SentencePiece algorithm, etc. To facilitate explanation, assume that each token corresponds to a complete word. The principles set forth herein, however, are not limited to the processing of text information; in other examples, the language model 702 operates on any of: audio information, image information, video information, sensor information, and so on, or any combination thereof.

Next, an embedding component (not shown) maps the sequence of tokens into respective token embeddings. For example, the embedding component produces one-hot vectors that describe the tokens, and then maps the one-hot vectors into the token embeddings using a machine-trained linear transformation. The embedding component then adds position information (and, in some cases, segment information) to the respective token embeddings to produce position-supplemented embedding vectors 706. The position information added to each token embedding describes the embedding vector's position in the sequence of token embeddings.

The first transformer component 704 operates on the position-supplemented embedding vectors 706. In some implementations, the first transformer component 704 includes, in order, an attention component 708, a first add-and-normalize component 710, a feed-forward neural network (FFN) component 712, and a second add-and-normalize component 714.

The attention component 708 determines how much emphasis should be placed on parts of input information when interpreting other parts of the input information. Consider, for example, a sentence that reads: "I asked the professor a question, but he could not answer it." When interpreting the word "it," the attention component 708 will determine how much weight or emphasis should be placed on each of the words of the sentence. The attention component 708 will find that the word "question" is most significant.

The attention component 708 performs attention analysis using the following equation:

$$Attention(Q, K, V) = \text{softmax}\left(\frac{QK^T}{\sqrt{d_k}}\right)V \qquad (5).$$

The attention component 708 produces query information $Q$ by multiplying the position-supplemented embedding vectors 706 by a query weighting matrix $W^Q$. Similarly, the attention component 708 produces key information $K$ and value information $V$ by multiplying the position-supplemented embedding vectors 706 by a key weighting matrix $W^K$ and a value weighting matrix $W^V$, respectively. To execute Equation (5), the attention component 708 takes the dot product of Q with the transpose of $K$, and then divides the dot product by a scaling factor $\sqrt{d}$, to produce a scaled result. The symbol $d_k$ represents the dimensionality of $Q$ and $K$. The attention component 708 takes the softmax (normalized exponential function) of the scaled result, and then multiplies the result of the softmax operation by $V$, to produce attention output information. In some cases, the attention component 708 is said to perform masked attention insofar as the attention component 708 masks output token information that, at any given time, has not yet been determined. Background information regarding the general concept of attention is provided in Vaswani, et al., "Attention Is All You Need," in 31st Conference on Neural Information Processing Systems (NIPS 2017), 2017, 11 pages.

Note that Fig. 7 shows that the attention component 708 is composed of plural attention heads, including a representative attention head 716. Each attention head performs the computations specified by Equation (5), but with respect to a particular representational subspace that is different than the subspaces of the other attention heads. To accomplish this operation, the attention heads perform the computations described above using different respective sets of query, key, and value weight matrices. Although not shown, the attention component 708 concatenates the output results of the attention component's separate attention heads, and then multiplies the results of this concatenation by another weight matrix $W^O$.

The add-and-normalize component 710 includes a residual connection that combines (e.g., sums) input information fed to the attention component 708 with the output information generated by the attention component 708. The add-and-normalize component 910 then normalizes the output information generated by the residual connection, e.g., by layer-normalizing values in the output information based on the mean and standard deviation of those values, or by performing root-mean-squared normalization. The other add-and-normalize component 714 performs the same functions as the first-mentioned add-and-normalize component 710. The FFN component 712 transforms input information to output information using a feed-forward neural network having any number of layers.

The first transformer component 704 produces output information 718. A series of other transformer components (720, ..., 722) perform the same functions as the first transformer component 704, each operating on output information produced by its immediately preceding transformer component. Each transformer component uses its own level-specific set of machine-trained weights. The final transformer component 722 in the language model 702 produces final output information 724.

In some implementations, a post-processing component 726 performs post-processing operations on the final output information 724. In the case of the plural-objective model 106 or novelty-reference model 118, the post-processing component 726 performs the functions of the item-selecting components (114, 124), respectively, and the preceding transformer components constitute the first encoder 112 or the second encoder 122. As a whole, in some implementations, the plural-objective model 106 and the novelty-reference model 118 adopt an encoder architecture, although other implementations use the principles described herein in a decoder-only architecture. In the case of the relevance-reference model 120, the post-processing component 726 can be implemented as a machine-trained linear layer followed by a softmax component (not shown). Here, the output of the post-processing component 726 is a prediction of the next token to follow the last-submitted token, and the preceding transformer components constitute a decoder (in a standalone decoder architecture).

In the case of the relevance-reference model 120, the relevance-reference model 120 operates in an autoregressive manner, as indicated by the loop 728. To operate in this way, the language model 702 appends a predicted token to the end of the sequence of input tokens, to provide an updated sequence of tokens. The predicted token leads to the production of a new position-supplemented vector 730. In a next pass, the language model 702 processes the updated sequence of position-supplemented vectors to generate a next predicted token. The language model 702 repeats the above process until it generates a specified stop token.

When used to implement the relevance-reference model 120 (e.g., the language model), the language model 702 can rely on a decoder-only architecture. Other implementations of the relevance-reference model 120 use an encoder-decoder transformer-based architecture. Here, a transformer-based decoder receives encoder output information produced by a transformer-based encoder, together with decoder input information. The encoder output information specifically includes KV information that serves an input to the attention components of the decoder (except the first transformer component).

Other implementations of the language model 702 use other kinds of machine-trained models besides, or in addition to, the particular transformer-based architecture shown in Fig. 7. The other machine-trained models include any of convolutional neural networks (CNNs), recurrent neural networks (RNNs), fully-connected feed-forward neural networks (FFNS), stable diffusion models, etc., or any combination thereof.

Figs. 8, 10, and 11 show three processes that represent an overview of the operation of the system functionality described above. Each of the processes is expressed as a series of operations performed in a particular order. But the order of these operations is merely representative, and the operations are capable of being varied in other implementations. Further, any two or more operations described below are capable of being performed in a parallel manner. In one implementation, the blocks shown in the processes that pertain to processing-related functions are implemented by the computing equipment described in connection with Figs. 12 and 13.

More specifically, Fig. 8 shows a process 802 for training a machine-trained model (e.g., the plural-objective model 106), which is, in some examples, a model that is trained to promote plural objectives. In block 804, the reinforcement learning system 104 chooses a state by selecting a source item and a target item. In block 806, the reinforcement learning system 104 chooses an action based on the state using a policy, the policy depending on model parameters used by the plural-objective model to encode at least the the source item (and the target items, if not precomputed), the action specifying whether the target item is selected because the target item matches the source item. In block 808, the reinforcement learning system 104 generates a reward based on, at least in part, the state and the action, the reward being based whether the action is confirmed by at least one reference model (e.g., the models 118 and 120). In block 810, the reinforcement learning system 104 updates the model parameters used by the plural-objective model based on the reward.

Fig. 9 shows illustrative performance of the inference-stage system 102 of Fig. 1 relative to other models. That is, the chart of Fig. 9 compares the operation of the inference-stage system 102 with the performance of the novelty-reference model 118 and with respect to a model that uses additional supervised fine-tuning in place of the above-described reinforcement learning. The chart of Fig. 9 also specifies the performance of the inference-stage system 102 produced as a result of two training settings. In a first case, the reinforcement learning system 104 uses an aggressive strategy for choosing plural negative samples from the output of the novelty-reference model 118. In a second case, a reinforcement learning system 104 uses a conservative strategy for choosing negative samples, e.g., based on triplet loss.

Each column associated with a heading Novelty@k, in some examples herein, refers to a percentage of the k candidate target items produced by the plural-objective model 106 that are not found in the $L$ candidate target items ($L$ = 200 in one example) produced by the novelty-reference model 118, for k = 50, 100, and 200. Each column with a heading Recall@k expresses a percentage of a predefined list of query-target-item relevance pairs that are present in the k target items produced by the plural-objective model 106. Precision@k, in some examples herein, refers to the percentage of target items produced by the plural-objective model 106 that are confirmed by another language model, different from, and having greater inference capabilities than, the relevance-reference model 120 used by reward system 116. For example, the other language model is the GPT-4 model provided by OpenAI.

As shown, the inference-stage system 102 achieves better novelty scores than the model produced based on supervised fine-tuning. For the conservative version of negative sampling, the inference-stage system 102 has recall and precision scores that are similar to that of the novelty-reference model 118 and the model produced based on supervised fine-tuning. The recall and precision scores of the inference-stage system 102 drop, however, when the aggressive version of negative sampling is used. This is because the aggressive promotion of novelty negatively impacts relevance. Based on these observations, it can be concluded that, for at least some modes of training, the inference-stage system 102 is effective in promoting novelty without significantly impacting relevance. In particular, the techniques described above can be expected to improve the novelty of results by 2X to 5X.

The use of the plural-objective model 106 in the inference-stage system 102 also makes it more likely that users will positively engage with the served target items. That is, for one case, the use of the plural-objective model 106 leads to a 1.0 percent increase in target item matching density, which is the average number of relevant target items selected per query (as determined by a downstream ranker component of a search engine). There is also a 0.14% increase in coverage, which, in some examples herein, refers to the fraction of queries for which relevant target items are shown to users. This indicates that the novelty optimization assists the inference-stage system 102 in matching target items to queries in those cases in which other matching algorithms are unsuccessful. There is also a 0.26% increase in click yield, which, in some examples herein, refers to the number of target item clicks per search query. These performance metrics have a significant impact on performance when scaled to the typically large number (e.g., millions) of users to whom the target items are served.

Finally, the merits of the training strategy described herein are agnostic to the types of models used to select target items. The benefits are also independent of the particular downstream applications that rely on the target items selected by the plural-objective model 106. These characteristics make the techniques described herein scalable to different environments. The characteristics also lower the maintenance costs in adapting the techniques to different environments.

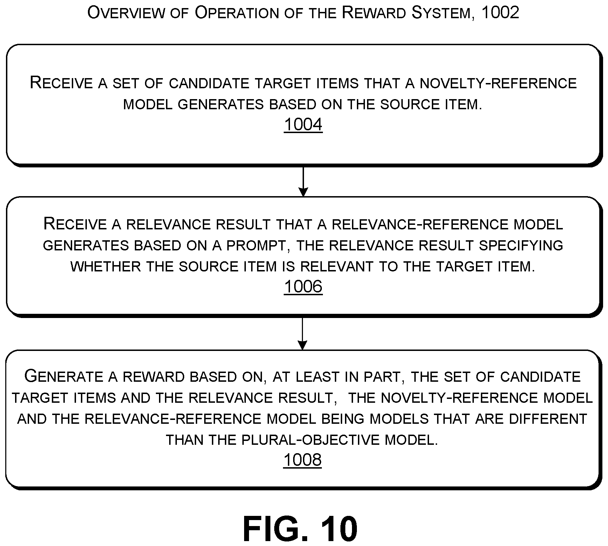

Fig. 10 shows a process 1002 that represents one manner of operation of the reward system 116 of Fig. 1. In block 1004, the reward system 116 receives a set of candidate target items that a novelty-reference model (e.g., the novelty-reference model 118) generates based on the source item. In some examples herein, a novelty-reference model is a model that serves as a reference for assessing novelty. In block 1006, the reward system 116 receives a relevance result that a relevance-reference model (e.g., the relevance-reference model 120) generates based on a prompt, the relevance result specifying whether the source item is relevant to the target item. In some examples herein, a relevance reference model is a model that serves as a reference for assessing relevance. In block 1008, the reward system 116 generates a reward based on, at least in part, the set of the candidate target items and the relevance result. The novelty-reference model and the relevance-reference model are models that are different than the plural-objective model.

Fig. 11 shows a process 1102 that represents the inference-stage application of a machine-trained model (e.g., the plural-objective model 106) trained by reinforcement learning. In some examples, a plural-objective model is a model that is trained to promote plural objectives. In block 1104, the inference-stage system 102 receives an input query. In block 1106, the inference-stage system 102 uses the plural-objective model to identify a first set of one or more target items in response to the query. In block 1108, the inference-stage system 102 generates output information based on at least one target item drawn from the first set of one or more target items. The plural-objective model has model parameters that have been trained by reinforcement learning to identify target items based on queries that are relevant to the respective source items and which differ, at least in part, from other target items produced by a novelty-reference model (e.g., the novelty-reference model 118) that is different than the plural-objective model. In some examples, a novelty-reference model is a model that serves as a reference for assessing novelty.

Fig. 12 shows computing equipment 1202 that, in some implementations, is used to implement the inference-stage system 102 and the reinforcement learning system 104. The computing equipment 1202 includes a set of local devices 1204 coupled to a set of servers 1206 via a computer network 1208. Each local device corresponds to any type of computing device, including any of a desktop computing device, a laptop computing device, a handheld computing device of any type (e.g., a smartphone or a tablet-type computing device), a mixed reality device, an intelligent appliance, a wearable computing device (e.g., a smart watch), an Internet-of-Things (IoT) device, a gaming system, an immersive "cave," a media device, a vehicle-borne computing system, any type of robot computing system, a computing system in a manufacturing system, etc. In some implementations, the computer network 1208 is implemented as a local area network, a wide area network (e.g., the Internet), one or more point-to-point links, or any combination thereof.

The bottom-most overlapping box in Fig. 12 indicates that the functionality of the inference-stage system 102 and/or the reinforcement learning system 104 is capable of being spread across the local devices 1204 and/or the servers 1206 in any manner. For example, in one implementation, the entirety of the inference-stage system 102 is implemented by either a local device or a server system. If implemented by a server system, a user is able to interact with the server system via a browser application running on a local device, e.g., via search interface page hosted by a search engine.

Fig. 13 shows a computing system 1302 that, in some implementations, is used to implement any aspect of the mechanisms set forth in the above-described figures. For instance, in some implementations, the type of computing system 1302 shown in Fig. 13 is used to implement any local computing device or any server shown in Fig. 12. In all cases, the computing system 1302 represents a physical and tangible processing mechanism.

The computing system 1302 includes a processing system 1304 including one or more processors. The processor(s) include one or more central processing units (CPUs), and/or one or more graphics processing units (GPUs), and/or one or more application specific integrated circuits (ASICs), and/or one or more neural processing units (NPUs), and/or one or more tensor processing units (TPUs), etc. More generally, any processor corresponds to a general-purpose processing unit or an application-specific processor unit.

The computing system 1302 also includes computer-readable storage media 1306, corresponding to one or more computer-readable media hardware units. The computer-readable storage media 1306 retains any kind of information 1308, such as machine-readable instructions, settings, model weights, and/or other data. In some implementations, the computer-readable storage media 1306 includes one or more solid-state devices, one or more hard disks, one or more optical disks, etc. Any instance of the computer-readable storage media 1306 uses any technology for storing and retrieving information. Further, any instance of the computer-readable storage media 1306 represents a fixed or removable unit of the computing system 1302. Further, any instance of the computer-readable storage media 1306 provides volatile and/or non-volatile retention of information. The specific term "computer-readable storage medium" or "storage device" expressly excludes propagated signals per se in transit; a computer-readable storage medium or storage device is "non-transitory" in this regard.

The computing system 1302 utilizes any instance of the computer-readable storage media 1306 in different ways. For example, in some implementations, any instance of the computer-readable storage media 1306 represents a hardware memory unit (such as random access memory (RAM)) for storing information during execution of a program by the computing system 1302, and/or a hardware storage unit (such as a hard disk) for retaining/archiving information on a more permanent basis. In the latter case, the computing system 1302 also includes one or more drive mechanisms 1310 (such as a hard drive mechanism) for storing and retrieving information from an instance of the computer-readable storage media 1306.

In some implementations, the computing system 1302 performs any of the functions described above when the processing system 1304 executes computer-readable instructions stored in any instance of the computer-readable storage media 1306. For instance, in some implementations, the computing system 1302 carries out computer-readable instructions to perform each block of the processes described with reference to Figs. 8, 10, and 11. Fig. 13 generally indicates that hardware logic circuitry 1312 includes any combination of the processing system 1304 and the computer-readable storage media 1306.

In addition, or alternatively, the processing system 1304 includes one or more other configurable logic units that perform operations using a collection of logic gates. For instance, in some implementations, the processing system 1304 includes a fixed configuration of hardware logic gates, e.g., that are created and set at the time of manufacture, and thereafter unalterable. In addition, or alternatively, the processing system 1304 includes a collection of programmable hardware logic gates that are set to perform different application-specific tasks. The latter category of devices includes programmable array logic devices (PALs), generic array logic devices (GALs), complex programmable logic devices (CPLDs), field-programmable gate arrays (FPGAs), etc. In these implementations, the processing system 1304 effectively incorporates a storage device that stores computer-readable instructions, insofar as the configurable logic units are configured to execute the instructions and therefore embody or store these instructions.

In some cases (e.g., in the case in which the computing system 1302 represents a user computing device), the computing system 1302 also includes an input/output interface 1314 for receiving various inputs (via input devices 1316), and for providing various outputs (via output devices 1318). Illustrative input devices include a keyboard device, a mouse input device, a touchscreen input device, a digitizing pad, one or more static image cameras, one or more video cameras, one or more depth camera systems, one or more microphones, a voice recognition mechanism, any position-determining devices (e.g., GPS devices), any movement detection mechanisms (e.g., accelerometers and/or gyroscopes), etc. In some implementations, one particular output mechanism includes a display device 1320 and an associated graphical user interface presentation (GUI) 1322. The display device 1320 corresponds to a liquid crystal display device, a light-emitting diode display (LED) device, a cathode ray tube device, a projection mechanism, etc. Other output devices include a printer, one or more speakers, a haptic output mechanism, an archival mechanism (for storing output information), etc. In some implementations, the computing system 1302 also includes one or more network interfaces 1324 for exchanging data with other devices via one or more communication conduits 1326. One or more communication buses 1328 communicatively couple the above-described units together.

The communication conduit(s) 1326 is implemented in any manner, e.g., by a local area computer network, a wide area computer network (e.g., the Internet), point-to-point connections, or any combination thereof. The communication conduit(s) 1326 include any combination of hardwired links, wireless links, routers, gateway functionality, name servers, etc., governed by any protocol or combination of protocols.

Fig. 13 shows the computing system 1302 as being composed of a discrete collection of separate units. In some cases, the collection of units corresponds to discrete hardware units provided in a computing device chassis having any form factor. Fig. 13 shows illustrative form factors in its bottom portion. In other cases, the computing system 1302 includes a hardware logic unit that integrates the functions of two or more of the units shown in Fig. 13. For instance, in some implementations, the computing system 1302 includes a system on a chip (SoC or SOC), corresponding to an integrated circuit that combines the functions of two or more of the units shown in Fig. 13.

The following summary provides a set of illustrative examples of the technology set forth herein.

(A1) According to one illustrative aspect, a method (e.g., the process 802) is described for training a machine-trained model (e.g., the plural-objective model 106). The plural-objective model is a model that is trained to promote plural objectives. The method includes: choosing (e.g., in block 804) a state by selecting a source item and a target item; choosing (e.g., in block 806) an action based on the state using a policy, the policy depending on model parameters used by the plural-objective model to encode at least the source item (and the target items, if not precomputed), the action specifying whether the target item is selected because the target item matches the source item; generating (e.g., in block 808) a reward based on the state and the action, the reward being based on, at least in part, whether the action is confirmed by at least one reference model; and updating (e.g., in block 810) the model parameters used by the plural-objective model based on the reward.

(A2) According to some implementations of the method of A1, the plural-objective model, at start of the training, includes pre-trained parameters produced based on supervised training.

(A3) According to some implementations of the methods of A1 or A2, the selecting of the source item includes sampling the source item from a data store of source items.

(A4) According to some implementations of any of the methods of A1-A3, the selecting of the target item includes sampling the target item based on probability information produced by the plural-objective model based on the source item, the probability information describing likelihoods of different candidate items matching the source item.

(A5) According to some implementations of any of the methods of A1-A4, the selecting of the target item includes sampling the target item from plural subsets of candidate target items produced by different item-selecting techniques, one of the techniques using the plural-objective model.

(A6) According to some implementations of any of the methods of A1-A5, the generating of the reward includes receiving a set of candidate target items that a novelty-reference model generates based on the source item, and determining whether the target item is among the set of candidate target items, the novelty-reference model being different than the plural-objective model. In some examples, a novelty-reference model is a model that serves as a reference for assessing novelty.

(A7) According to some implementations of the method of A6, the novelty-reference model has been trained using supervised training based on a training set that specifies pairs of items that are considered associated and pairs of items that are considered non-associated, based on a specified standard of association.

(A8) According to some implementations of any of the methods of A1-A7, the generating of the reward includes receiving a relevance result that a relevance-reference model generates based on a prompt, the relevance-reference model being different than the plural-objective model. The prompt includes a description of the source item and the target item and instructions as to a task that the relevance-reference model is being asked to perform. The relevance result indicates whether the target item is relevant to the source item. In some examples, a relevance-reference model is a model that serves as a reference for assessing novelty.

(A9) According to some implementations of the method of A8, the relevance-reference model is a language model that autoregressively generates the relevance result.

(A10) According to some implementations of any of the methods of A1-A5, the generating of the reward includes: receiving a set of candidate target items that a novelty-reference model generates based on the source item; receiving a relevance result that a relevance-reference model generates based on a prompt, the relevance result specifying whether the source item is relevant to the target item; and generating the reward based on, at least in part, the set of candidate target items and the relevance result. The novelty-reference model and the relevance-reference model are models that are different than the plural-objective model. In some examples, the novelty-reference model is a model that serves a reference for assessing novelty, and the relevance-reference model is a model that serves as a reference for assessing relevance.

(A11) According to some implementations of any of the methods of A1-A10, the plural-objective model includes a first encoder for mapping the source item into first encoder output information, and a second encoder for mapping the target item into second encoder output information. The plural-objective model also includes logic for generating a score that expresses an extent to which the second encoder output information matches the first encoder output information. The updating of the model parameters includes updating the model parameters used by the first encoder and the second encoder.

(A12) According to some implementations of any of the methods of A1-A10, the plural-objective model includes a first encoder for mapping the source item into first encoder output information. Pre-generated second encoder output information is retrieved from a data store. The plural-objective model further includes logic for generating a score that expresses an extent to which the second encoder output information matches the first encoder output information. The updating of the model parameters includes updating the model parameters used by the first encoder. Encoder output information pertaining to candidate target items remains fixed.

(B1) According to another illustrative aspect, a method (e.g., the process 1102) is described for processing an input query using a machine-trained model (e.g., the plural-objective model 106). In some examples, a plural-objective model is a model that is trained to promote plural objectives. The method includes: receiving (e.g., in block 1104) the input query; using (e.g., in block 1106) the plural-objective model to identify a set of one or more target items in response to the query; and generating (e.g., in block 1108) output information based on at least one target item drawn from the set of one or more target items. The plural-objective model has model parameters that have been trained by reinforcement learning to identify target items based on queries that are relevant to the respective source items and which differ, at least in part, from other target items produced by a novelty-reference model (e.g., the novelty-reference model 118) that is different than the plural-objective model. In some examples, a novelty-reference model is a model that serves as a reference for assessing novelty.

In the above description, in some examples, the term "particular model" can be used to replace "plural-objective model." The terms "first reference model" and "second reference model" can be used to replace "novelty-reference model" and "relevance-reference model," respectively. The terms "first item" and "second item" can be used to replace "source item" and "target item," respectively.

In yet another aspect, some implementations of the technology described herein include a computing system (e.g., the computing system 1302) that includes a processing system (e.g., the processing system 1304) having a processor. The computing system also includes a storage device (e.g., the computer-readable storage media 1306) for storing computer-readable instructions (e.g., the information 1308). The processing system executes the computer-readable instructions to perform any of the methods described herein (e.g., any individual method of the methods of A1-A12 and B1).

In yet another aspect, some implementations of the technology described herein include a computer-readable storage medium (e.g., the computer-readable storage media 1306) for storing computer-readable instructions (e.g., the information 1308). A processing system (e.g., the processing system 1304) executes the computer-readable instructions to perform any of the operations described herein (e.g., the operations in any individual method of the methods of A1-A12 and B1).

More generally stated, any of the individual elements and steps described herein are combinable into any logically consistent permutation or subset. Further, any such combination is capable of being manifested as a method, device, system, computer-readable storage medium, data structure, article of manufacture, graphical user interface presentation, etc. The technology is also expressible as a series of means-plus-format elements in the claims, although this format should not be considered to be invoked unless the phrase "means for" is explicitly used in the claims.

This description may have identified one or more features as optional. This type of statement is not to be interpreted as an exhaustive indication of features that are to be considered optional; generally, any feature is to be considered as an example, although not explicitly identified in the text, unless otherwise noted. Further, any mention of a single entity is not intended to preclude the use of plural such entities; similarly, a description of plural entities in the specification is not intended to preclude the use of a single entity. As such, a statement that an apparatus or method has a feature X does not preclude the possibility that it has additional features. Further, any features described as alternative ways of carrying out identified functions or implementing identified mechanisms are also combinable together in any combination, unless otherwise noted.

In terms of specific terminology herein in examples herein, the phrase "configured to" encompasses various physical and tangible mechanisms for performing an identified operation. The mechanisms are configurable to perform an operation using the hardware logic circuitry 1312 of Fig. 13. The term "logic" likewise encompasses various physical and tangible mechanisms for performing a task. For instance, each processing-related operation illustrated in the flowcharts of Figs. 8, 10, and 11 corresponds to a logic component for performing that operation.

Further, the term "plurality" or "plural" or the plural form of any term (without explicit use of "plurality" or "plural") refers to two or more items, and does not necessarily imply "all" items of a particular kind, unless otherwise explicitly specified. The term "at least one of" refers to one or more items; reference to a single item, without explicit recitation of "at least one of" or the like, is not intended to preclude the inclusion of plural items, unless otherwise noted. To say that an action is performed "based on" a particular factor, is not meant to imply that the action is performed only on the basis of that particular factor. Further, the descriptors "first," "second," "third," etc. are used to distinguish among different items, and do not imply an ordering among items, unless otherwise noted. The phrase "A and/or B" means A, or B, or A and B. The phrase "any combination thereof" refers to any combination of two or more elements in a list of elements. Further, the terms "comprising," "including," and "having" are open-ended terms that are used to identify at least one part of a larger whole, but not necessarily all parts of the whole. A "set" is a group that includes one or more members. The phrase "A corresponds to B" means "A is B" in some contexts. The term "prescribed" is used to designate that something is purposely chosen according to any environment-specific considerations. For instance, a threshold value or state is said to be prescribed insofar as it is purposely chosen to achieve a desired result. "Environment-specific" means that a state is chosen for use in a particular environment. Finally, the terms "exemplary" or "illustrative" refer to one implementation among potentially many implementations.

In closing, the functionality described herein is capable of employing various mechanisms to ensure that any user data is handled in a manner that conforms to applicable laws, social norms, and the expectations and preferences of individual users. For example, the functionality is configurable to allow a user to expressly opt in to (and then expressly opt out of) the provisions of the functionality. The functionality is also configurable to provide suitable security mechanisms to ensure the privacy of the user data (such as data-sanitizing mechanisms, encryption mechanisms, and/or password-protection mechanisms).

Further, the description may have set forth various concepts in the context of illustrative challenges or problems. This manner of explanation is not intended to suggest that others have appreciated and/or articulated the challenges or problems in the manner specified herein. Further, this manner of explanation is not intended to suggest that the subject matter recited in the claims is limited to solving the identified challenges or problems; that is, the subject matter in the claims may be applied in the context of challenges or problems other than those described herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method (804) for training a machine-trained model (106), comprising:

   choosing (804) a state by selecting a source item and a target item;
   choosing (806) an action based on the state using a policy, the policy depending on model parameters used by a plural-objective model (106) to encode at least the source item, the plural-objective model (106) being a model that is trained to promote plural objectives,
   the action specifying whether the target item is selected because the target item matches the source item;
   generating (808) a reward based on the state and the action, the reward being based on, at least in part, whether the action is confirmed by at least one reference model (118, 120); and
   updating (810) the model parameters used by the plural-objective model (106) based on the reward.

2. The method of claim 1, wherein the plural-objective model, at a start of the training, includes pre-trained parameters produced based on supervised training.

3. The method of claim 1, wherein the selecting of the source item includes sampling the source item from a data store of source items.

4. The method of claim 1, wherein the selecting of the target item is provided according to one of the following:

   (i) the selecting of the target item includes sampling the target item based on probability information produced by the plural-objective model based on the source item, the probability information describing likelihoods of different candidate items matching the source item;
   (ii) the selecting of the target item includes sampling the target item from plural subsets of candidate target items produced by different item-selecting techniques, one of the techniques using the plural-objective model.

5. The method the of claim 1, wherein the generating of the reward includes receiving a set of candidate target items that a novelty-reference model generates based on the source item, and determining whether the target item is among the set of candidate target items, the novelty-reference model being different than the plural-objective model, the novelty-reference model being a model that serves as a reference for assessing novelty.

6. The method of claim 5, wherein the novelty-reference model has been trained using supervised training based on a training set that specifies pairs of items that are considered associated and pairs of items that are considered non-associated, based on a specified standard of association.

7. The method of claim 1, wherein the generating of the reward includes receiving a relevance result that a relevance-reference model generates based on a prompt, the relevance-reference model being different than the plural-objective model, the relevance-reference model being a model that serves as a reference for assessing relevance,

the prompt including a description of the source item and the target item and instructions as to a task that the relevance-reference model is being asked to perform, and
the relevance result indicating whether the target item is relevant to the source item.

8. The method of claim 7, wherein the relevance-reference model is a language model that autoregressively generates the relevance result.

9. The method of claim 1, wherein the generating of the reward includes:

receiving a set of candidate target items that a novelty-reference model generates based on the source item, the novelty-reference model being a model that serves as a reference for assessing novelty;
receiving a relevance result that a relevance-reference model generates based on a prompt, the relevance result specifying whether the source item is relevant to the target item, the relevance-reference model being a model that serves as a basis for assessing relevance; and
generating the reward based on, at least in part, the set of candidate target items and the relevance result, the novelty-reference model and the relevance-reference model being models that are different than the plural-objective model.

10. The method of claim 1,

wherein the plural-objective model includes a first encoder for mapping the source item into first encoder output information, and a second encoder for mapping the target item into second encoder output information, and logic for generating a score that expresses an extent to which the second encoder output information matches the first encoder output information, and
wherein the updating of the model parameters includes updating the model parameters used by the first encoder and the second encoder.

11. The method of claim 1,

wherein the plural-objective model includes a first encoder for mapping the source item into first encoder output information,
wherein pre-generated second encoder output information associated with the target item is retrieved from a data store,
wherein the plural-objective model further includes logic for generating a score that expresses an extent to which the second encoder output information matches the first encoder output information, and
wherein the updating of the model parameters includes updating the model parameters used by the first encoder, encoder output information pertaining to candidate target items remaining fixed.

12. A processing system having a processor and a storage device that is configured to perform the computer-implemented method according to any of claims 1-11.

13. A computer-readable storage medium for storing computer-readable instructions that, when executed by a processing system, perform the computer-implemented method according to any of claims 1-11.

14. A computing system for processing an input query using a machine-trained model, comprising:

an instruction data store for storing computer-readable instructions; and
a processing system for executing the computer-readable instructions in the data store, to perform operations including:

receiving the input query;
using the plural-objective model to identify a set of one or more target items in response to the query, the plural-objective model being a model that is trained to promote plural objectives; and
generating output information based on at least one target item drawn from the set of one or more target items,
the plural-objective model having model parameters that have been trained by reinforcement learning to identify target items based on queries that are relevant to the respective source items and which differ, at least in part, from other target items produced by a novelty-reference model that is different than the plural-objective model, the novelty-reference model being a model that serves as a reference for assessing novelty.

15. The computing system of claim 14, wherein the using the plural-objective model comprises using the plural-objective model to generate first encoder output information based on the query, and comparing the first encoder output information with each of plural instances of second encoder output information associated with different respective target items; or

wherein the reinforcement learning represents each state as a particular query and a particular target item, wherein an action associated with the state is an indication of whether the particular target item is selected because the particular target item matches the query; or
wherein the reinforcement learning produces the model parameters based on a reward that is generated by:

receiving a set of candidates target items that the novelty-reference model generates based on the particular query;
receiving a relevance result that a relevance-reference model generates based on a prompt, the relevance result specifying whether the particular query is relevant to the particular target item, the relevance-reference model being a model that serves as a reference for assessing relevance; and
generating the reward based on, at least in part, the set of candidate target items and the relevance result.

ANY REPLACED OR SUPPLEMENTED LEGACY MODEL(S) 108

INFERENCE-STAGE SYSTEM 102

$x$ → FIRST ENCODER $f(\theta)$ 112 → FIRST ITEM-SELECTING COMPONENT 114 → (BASED ON NOVELTY AND RELEVANCE) $Top_\theta z$ ($k$ ITEMS) → OUTPUT-GENERATING SYSTEM 110

PLURAL-OBJECTIVE MODEL ($\theta$) 106

PRE-GENERATED TARGET-ITEM VECTOR FOR $z$

TRAINED WEIGHTS $\theta$

REINFORCEMENT LEARNING SYSTEM (SEE FIG. 5) 104

REWARD SYSTEM 116

REWARD-GENERATING COMPONENT 126 → REWARD $r$

$(x, z1)$

$L\ Top_\psi z$

$Rel <Y,N>$

$x$ → NOVELTY-REFERENCE MODEL ($\psi$) 118

RELEVANCE-REFERENCE MODEL (E.G., LLM) 120 ← PROMPT $(x, z1)$

NOVELTY-REFERENCE MODEL ($\psi$) 118

$x$ → SECOND ENCODER $f(\psi)$ 122 → SECOND ITEM-SELECTING COMPONENT 124 → $Top_\psi z$ ($L$ ITEMS)

## FIG. 1

INPUT QUERY 202

$x$ = tankless water heater electric home depot

NOVELTY-
REFERENCE
MODEL ($\psi$)
118

PLURAL-
OBJECTIVE
MODEL ($\theta$)
106

TOP 5 TARGET ITEM RESULTS$_\psi$ 204

$z_{\psi 1}$ = home depot tankless water heater

$z_{\psi 2}$ = residential electric tankless water heater

$z_{\psi 3}$ = electrical tankless water heater

$z_{\psi 4}$ = electric tankless water heater

$z_{\psi 5}$ = water heater electric tankless

TOP 5 TARGET ITEM RESULTS$_\theta$
206

$z_{\theta 1}$ = instant water heater electric

$z_{\theta 2}$ = instant electric water heater

$z_{\theta 3}$ = domestic electrical appliances

$z_{\theta 4}$ = instant water heaters electric

$z_{\theta 5}$ = instant electric water heaters

OUTPUT ITEMS

OUTPUT ITEMS

# FIG. 2

PRE-GENERATED TARGET ITEM VECTORS — 306

FIRST ITEM-SELECTING COMPONENT 114'

MATCHING COMPONENT 308 (SIM, SOFTMAX, ETC.)

310

$x, z_1, Prob_{x,z1}$
$x, z_2, Prob_{x,z2}$
$x, z_3, Prob_{x,z3}$
. . . . .

RANKING COMPONENT 312

$h_x$

$h_z$

SOURCE-ITEM ENCODER $(\theta)$ 302

TARGET-ITEM ENCODER $(\theta')$ 304

ENCODER $f(\theta)$ 112'

$Top_\theta z$

— 106'

$x$

$z$

## FIG. 3

PRE-GENERATED TARGET ITEM EMBEDDINGS — 306

MATCHING COMPONENT 308 (SIM, SOFTMAX, ETC.)

310

$query, z_1, Prob_{q,z1}$
$query, z_2, Prob_{q,z2}$
$query, z_3, Prob_{q,z3}$
. . . . .

RANKING COMPONENT 312

$h_q$

SOURCE-ITEM ENCODER $(\theta)$ 302

$Top_\theta z$

OUTPUT-GENERATING SYSTEM 110

DOC, AD, ETC.

QUERY

## FIG. 4

— 402

INITIAL MODEL AT START OF TRAINING 502

PLURAL-OBJECTIVE MODEL $(\theta)$ 106

STATE-SELECTING COMPONENT 504

ACTION-SELECTING COMPONENT $(\pi_\theta)$ 512

$x, z1$

508

TRAINING DATA SET

$x, z1$

ACTION $a$

ITERATATE

SOURCE ITEM-SAMPLING COMPONENT 506

REWARD SYSTEM 116

REWARD $r$

TARGET SAMPLING COMPONENT 510

POLICY-UPDATING COMPONENT 514

$\Delta\theta$

$z$

104

REINFORCEMENT LEARNING SYSTEM

FIG. 5

OPERATION OF THE REINFORCEMENT LEARNING SYSTEM 602

**FIG. 6**

MACHINE-TRAINED
MODEL

702 ⟶

POST PROCESSING COMPONENT 726

728 ⟋

OUTPUT INFORMATION 724

NTH TRANSFORMER COMPONENT 722

⋮

SECOND TRANSFORMER COMPONENT 720

718 ⟋

ADD & NORMALIZE COMPONENT 2
714

FFN COMPONENT
712

ADD & NORMALIZE COMPONENT 1
710

ATTENTION HEAD 1
716

} ATTENTION
COMPONENT
708

FIRST TRANSFORMER
COMPONENT 704

706 { ⋯ ⟍ 730

## FIG. 7

OVERVIEW OF OPERATION OF THE REINFORCEMENT LEARNING SYSTEM, 802

CHOOSE A STATE BY SELECTING A SOURCE ITEM AND A TARGET ITEM.
804

CHOOSE AN ACTION BASED ON THE STATE USING A POLICY, THE POLICY DEPENDING ON MODEL PARAMETERS USED BY THE PLURAL-OBJECTIVE MODEL TO ENCODE AT LEAST THE SOURCE ITEM, THE ACTION SPECIFYING WHETHER THE TARGET ITEM IS SELECTED BECAUSE THE TARGET ITEM MATCHES THE SOURCE ITEM.
806

GENERATE A REWARD BASED ON THE STATE AND THE ACTION, THE REWARD BEING BASED ON, AT LEAST IN PART, WHETHER THE ACTION IS CONFIRMED BY AT LEAST ONE REFERENCE MODEL.
808

UPDATE THE MODEL PARAMETERS USED BY THE PLURAL-OBJECTIVE MODEL BASED ON THE REWARD.
810

# FIG. 8

| Model | Novelty | | | Recall | | Precision |
|---|---|---|---|---|---|---|
| | N@50 | N@100 | N@200 | R@100 | R@200 | P@3 |
| Base Model | – | – | – | 45.0 | 54.1 | 63.7 |
| Supervised Fine-tuning | 6.6 | 22.7 | 79.1 | 49.1 | 53.5 | 65.5 |
| Fig. 1 System (Config1) | 14.5 | 39.6 | 107.8 | 46.8 | 56.4 | 70.0 |
| Fig. 1 System (Config2) | 32.8 | 70.2 | 151.8 | 27.6 | 37.7 | 51.8 |

# FIG. 9

OVERVIEW OF OPERATION OF THE REWARD SYSTEM, 1002

RECEIVE A SET OF CANDIDATE TARGET ITEMS THAT A NOVELTY-REFERENCE MODEL GENERATES BASED ON THE SOURCE ITEM.
1004

RECEIVE A RELEVANCE RESULT THAT A RELEVANCE-REFERENCE MODEL GENERATES BASED ON A PROMPT, THE RELEVANCE RESULT SPECIFYING WHETHER THE SOURCE ITEM IS RELEVANT TO THE TARGET ITEM.
1006

GENERATE A REWARD BASED ON, AT LEAST IN PART, THE SET OF CANDIDATE TARGET ITEMS AND THE RELEVANCE RESULT, THE NOVELTY-REFERENCE MODEL AND THE RELEVANCE-REFERENCE MODEL BEING MODELS THAT ARE DIFFERENT THAN THE PLURAL-OBJECTIVE MODEL.
1008

# FIG. 10

OVERVIEW OF OPERATION OF THE INFERENCE-STAGE SYSTEM, 1102

RECEIVE AN INPUT QUERY.
1104

USE THE PLURAL-OBJECTIVE MODEL TO IDENTIFY A SET OF ONE OR MORE
TARGET ITEMS IN RESPONSE TO THE QUERY.
1106

GENERATE OUTPUT INFORMATION BASED ON AT LEAST ONE TARGET ITEM
DRAWN FROM THE SET OF ONE OR MORE TARGET ITEMS, THE PLURAL-
OBJECTIVE MODEL HAVING MODEL PARAMETERS THAT HAVE BEEN TRAINED BY
REINFORCEMENT LEARNING TO IDENTIFY TARGET ITEMS BASED ON QUERIES
THAT ARE RELEVANT TO THE RESPECTIVE SOURCE ITEMS AND WHICH DIFFER,
AT LEAST IN PART, FROM OTHER TARGET ITEMS PRODUCED BY A NOVELTY-
REFERENCE MODEL THAT IS DIFFERENT THAN THE PLURAL-OBJECTIVE MODEL.
1108

# FIG. 11

1204                                             1206

LOCAL DEVICE          COMPUTER NETWORK          SERVER
                      1208

INFERENCE-STAGE SYSTEM 102

REINFORCEMENT LEARNING SYSTEM 104

1302

# FIG. 12

OUTPUT DEVICE(S)
1318

DISPLAY
DEVICE
1320

GUI
1322

HARDWARE LOGIC
CIRCUITRY
1312

PROCESSING SYSTEM
1304
(INCLUDING ANY OF
CPU(S), GPU(S),
ASIC(S), CONFIGURABLE
LOGIC UNIT(S), ETC.)

COMMUN-
ICATION
CONDUIT(S)
1326

I/O
1314

1328

NETWORK
INTER-
FACE(S)
1324

INPUT
DEVICE(S)
1316

COMPUTER-READABLE
STORAGE MEDIA, E.G.,
• SOLID-STATE
  MEMORY
• HARD DISK(S)
• FLASH DEVICE(S)
• OPTICAL DISK(S)
• MAGNETIC MEDIA
• ETC.
1306

INSTRUCTIONS,
DATA,
SETTINGS, ETC.
1308

DRIVE
MECHANISMS
1310

1302

COMPUTING SYSTEM

FOR
EXAMPLE:

GAME

"CAVE"

SERVER

• • •

# FIG. 13

Europäisches Patentamt

European Patent Office

Office européen des brevets

# EUROPEAN SEARCH REPORT

**Application Number**

EP 25 16 4974

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STAMENKOVIC DUSAN DUSAN STAMENKOVIC@DMI UNS AC RS ET AL: "Choosing the Best of Both Worlds Diverse and Novel Recommendations through Multi-Objective Reinforcement Learning", MOTION, INTERACTION AND GAMES, ACMPUB27, NEW YORK, NY, USA, 11 February 2022 (2022-02-11), pages 957-965, XP058782837, DOI: 10.1145/3488560.3498471 ISBN: 978-1-4503-9132-0 * sections 1, 3-5 * | 1-15 | INV.<br>G06N3/092<br>G06N3/045<br>G06N3/096<br>G06F16/00<br><br>ADD.<br>G06N3/048<br>G06N3/09 |

-----

|  |  |  | TECHNICAL FIELDS SEARCHED (IPC) |
|---|---|---|---|
|  |  |  | G06N<br>G06F |

The present search report has been drawn up for all claims

| Place of search | Date of completion of the search | Examiner |
|---|---|---|
| The Hague | 17 July 2025 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## REFERENCES CITED IN THE DESCRIPTION

**Non-patent literature cited in the description**

- **DEVLIN et al.** BERT: Pre-training of Deep Bidirectional Transformers for Language Understanding. *Proceedings of the 2019 Conference of the North American Chapter of the Association for Computational Linguistics: Human Language Technologies*, June 2018, vol. 1, 4171-4186
- **SCHROFF et al.** FaceNet: A Unified Embedding for Face Recognition and Clustering. *arXiv:1503.03832v3*, 17 June 2015, 10
- **WILLIAMS et al.** Simple statistical gradient-following algorithms for connectionist reinforcement learning. *Machine Learning*, 1992, vol. 8, 229-256
- **VASWANI et al.** Attention Is All You Need. *31st Conference on Neural Information Processing Systems (NIPS 2017)*, 2017, 11